# EUROPÄISCHE PATENTSCHRIFT

(11) **EP 1 984 228 B1**
(45) Veröffentlichungstag und Bekanntmachung des Hinweises auf die Patenterteilung: **04.05.2011**
(21) Anmeldenummer: 06819182.4
(22) Anmeldetag: 30.10.2006
(51) Int. Cl.: B62D 3/12, B62D 3/00, H02K 5/10, F16H 57/02, F16N 31/00, F16K 24/00, F01M 13/02

(54) **VORRICHTUNG ZUM FREIGEBEN EINER ÖFFNUNG IN EINEM GEHÄUSETEIL EINES LENKGETRIEBES**
DEVICE FOR UNCOVERING AN OPENING IN A HOUSING PART OF A STEERING GEAR
DISPOSITIF POUR DÉGAGER UNE OUVERTURE DANS UN ÉLÉMENT DE BOÎTIER D'UN MÉCANISME DE DIRECTION

(30) Priorität: 14.02.2006 DE 102006006679
(43) Veröffentlichungstag der Anmeldung: 29.10.2008
(60) Teilanmeldung: 10176433.0
(73) Patentinhaber: ZF-Lenksysteme GmbH, 73527 Schwäbisch Gmünd (DE)
(72) Erfinder: BAREIS, Helmut, 73569 Eschach (DE); BUDAKER, Martin, 73540 Heubach (DE); KUNZ, Reiner, 73577 Birkenlohe (DE); REUTER DR., Wolfgang, 61197 Florstadt (DE); HETZEL, Oliver, 73550 Waldstetten (DE); HASENCLEVER, John, 71134 Aidlingen (DE)
(86) Internationale Anmeldenummer: PCT/EP2006/067903
(87) Internationale Veröffentlichungsnummer: WO 2007/093235

(56) Entgegenhaltungen:
- DE-A1- 10 122 993
- DE-A1- 19 917 392
- FR-A- 2 098 823
- FR-A1- 2 859 156
- US-A- 4 922 960

## Beschreibung

Die Erfindung betrifft eine Vorrichtung zum Freigeben einer Öffnung in einem Gehäuseteil eines Lenkgetriebes nach der im Oberbegriff von Anspruch 1 näher definierten Art.

Lenkungen für Kraftfahrzeuge sind im Allgemeinen im Bereich der Verbindung der Zahnstange mit den Spurstangen mittels Faltenbälgen gegen die Umgebung abgedichtet. Ein Problem dieser meist aus einem elastomeren Werkstoff bestehenden Faltenbälge ist, dass sie beispielsweise durch Tierbisse, Steinschläge, Werkzeuge oder andere Einflüsse beschädigt werden können. Zwar lässt sich dieses Risiko durch den Einsatz hochwertiger Werkstoffe verringern, es kann jedoch nicht vollständig ausgeschlossen werden.

In der DE 199 17 392 A1 wird eine Servolenkung für Kraftfahrzeuge beschrieben. Die Servolenkung weist eine in einem Lenkgehäuse längsverschieblich angeordnete Zahnstange sowie mit der Zahnstange zugeordnete Spurstangen auf. Ein Faltenbalg ist jeweils mit dem Lenkgehäuse einerseits und der benachbarten Spurstange andererseits verbunden. Der Faltenbalg weist eine Öffnung auf, die mit einer aus einem gasdurchlässigen, wasserabweisenden Material gefertigte Membran verschlossen ist, die dem Austausch der im Lenkgehäuse befindlichen Luft mit der Atmosphäre dient. Außerdem weist die Membran Wasser und Schmutz ab.

Ein Problem dieser meist aus einem elastomeren Werkstoff bestehenden Faltenbälge ist, dass sie beispielsweise durch Tierbisse, Steinschläge, Werkzeuge oder andere Einflüsse beschädigt werden können. Zwar lässt sich dieses Risiko durch den Einsatz hochwertiger Werkstoffe verringern, es kann jedoch nicht vollständig ausgeschlossen werden.

Die DE 199 17 392 A1 beschreibt eine Servolenkung mit einem Lenkgehäuse, welches einen von einer gasdurchlässigen und flüssigkeitsdichten Membran verschlossenen Anschluss aufweist.

Aus der FR 2 098 823 A1 ist eine Einrichtung bekannt, mit welcher Kondenswasser aus einem Gehäuse abgeleitet werden kann. Dabei ist ein hydrophiles Element vorgesehen, welches die Öffnung zum Ableiten des Kondenswassers verschließt und durch seine Kapillarwirkung das Wasser durchlassen kann.

Wenn die Faltenbälge beschädigt werden, so ist die gesamte Lenkung nicht mehr dicht und es kann Feuchtigkeit in das Lenkgetriebe eintreten. Da sich die beschädigte Stelle des Faltenbalgs nur äußerst selten an der tiefsten Stelle des Lenkgetriebes befindet, fließt das eintretende Wasser nicht von selbst ab und sammelt sich innerhalb des Lenkgehäuses. Für die funktionalen Bauteile des Lenkgetriebes ist jedoch insbesondere stehendes Wasser schädlich und kann unter Umständen zu Funktionsstörungen führen.

Es ist daher Aufgabe der vorliegenden Erfindung, eine Vorrichtung zum Freigeben einer Öffnung in einem Gehäuseteil eines Lenkgetriebes bei einer Fahrzeuglenkung zu schaffen, welche im Falle eines Flüssigkeitseintritts mit möglichst einfachen Mitteln ein zwangsweises Freigeben einer Öffnung des Lenkgetriebes sicherstellt.

Erfindungsgemäß wird diese Aufgabe durch die in Anspruch 1 genannten Merkmale gelöst.

Das Material des Bauteiles ist in vorteilhafter Weise so gewählt, dass erst stehende Flüssigkeit den Auflösungsprozess des Bauteiles auslöst und die feste Konsistenz des Bauteiles bei hoher Luftfeuchtigkeit erhalten bleibt. Durch die Schwerkraft oder durch ein zusätzliches Federelement wird das Verschlusselement aus dem Gehäuse entfernt und die Öffnung freigegeben.

Eine in Anspruch 11 angegebene, alternative Ausgestaltung der Erfindung kann darin bestehen, dass das Bauteil aus einem Material besteht, welches, wenn es mit einer Flüssigkeit in Kontakt kommt, chemisch derart reagiert, dass das Bauteil das Verschlusselement zerstört. Hierbei sind im Wesentlichen keine mechanischen Abläufe vorhanden, sondern es wird durch die chemische Reaktion des Bauteils mit der Flüssigkeit und die anschließende Reaktion des durch die Flüssigkeit veränderten Bauteils mit dem Verschlusselement ein Freigeben der Öffnung sichergestellt.

Sämtlichen Lösungen ist gemeinsam, dass sie eine verhältnismäßig einfache Konstruktion aufweisen und lediglich das zusätzliche Bauteil erforderlich ist, welches eine seiner Eigenschaften ändert, wenn es mit einer Flüssigkeit in Kontakt kommt. Dadurch bleibt das Verschlusselement in dem Zustand, in dem keine Flüssigkeit in das Gehäuse des Lenkgetriebes eindringt, verschlossen, wohingegen ein Eindringen von Flüssigkeit in das Lenkgetriebe zu einem sehr raschen Öffnen des Verschlusselements und somit zu einem Freigeben der Öffnung führt. Dadurch kann die sich in dem Lenkgetriebe befindliche Flüssigkeit über die nunmehr freigegebene Öffnung aus dem Lenkgetriebe austreten und es werden weitere Beschädigungen verhindert.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine sehr schematische Darstellung einer Fahrzeuglenkung;
- Fig. 2: eine erste Ausführungsform einer nicht erfindungsgemäßen Vorrich- tung;
- Fig. 3: eine zweite Ausführungsform einer nicht erfindungsgemäßen Vorrich- tung; und
- Fig. 4: eine dritte Ausführungsform der erfindungsgemäßen Vorrich- tung.
- Fig. 5: eine vierte Ausführungsform der erfindungsgemäßen Vorrich- tung.
- Fig. 6: eine fünfte Ausführungsform der erfindungsgemäßen Vorrich- tung.
- Fig. 7: eine sechste Ausführungsform der erfindungsgemäßen Vorrich- tung.
- Fig. 8: eine siebente Ausführungsform der erfindungsgemäßen Vorrich- tung.
- Fig. 9: eine achte Ausführungsform der erfindungsgemäßen Vorrich- tung.

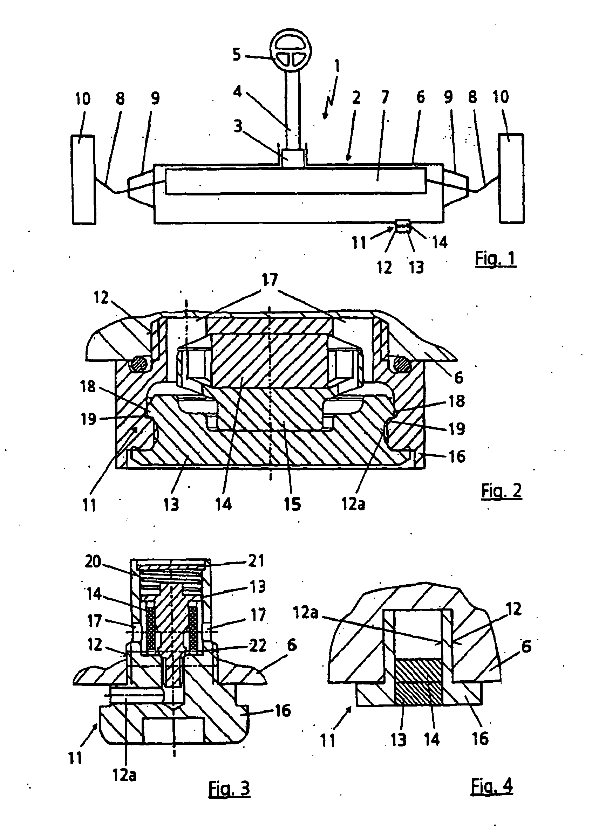

Eine in Fig. 1 sehr schematisch dargestellte Fahrzeuglenkung 1 für ein nicht dargestelltes Kraftfahrzeug weist in an sich bekannter Weise ein Lenkgetriebe 2 auf, auf dessen Eingangsseite sich ein Ritzel 3, eine Lenksäule 4 und eine Lenkhandhabe 5 befinden. Auf der Ausgangsseite des Lenkgetriebes 2 befindet sich eine in einem Gehäuseteil 6 des Lenkgetriebes 2 in Längsrichtung derselben verschiebliche Zahnstange 7. Als Gehäuseteil 6 wird dabei das gesamte Gehäuse, jedoch auch ein einzelnes Bauteil des Gehäuses, wie z. B. ein Gehäusedeckel oder dergleichen, angesehen.

Die Zahnstange 7 ist an ihren beiden Enden mit jeweiligen Spurstangen 8 verbunden. Der Verbindungsbereich zwischen der Zahnstange 7 und den Spurstangen 8 ist von einem jeweiligen Faltenbalg 9 umgehen. In an sich bekannter Weise sind an den Spurstangen 8 jeweilige Räder 10 des Kraftfahrzeugs angebracht.

Da bei einer Beschädigung eines der Faltenbälge 9 eine Flüssigkeit, insbesondere Wasser, in das Lenkgetriebe 2 eintreten kann, ist an dem Gehäuseteil 6 eine Vorrichtung 11 zum Freigeben einer Öffnung 12 in dem Gehäuseteil 6 angeordnet. Die Öffnung 12 ist mit einem Verschlusselement 13 verschlossen, so dass in diesem Bereich keine Flüssigkeit von außen in das Lenkgetriebe 2 eindringen kann. Bei sämtlichen Ausführungsformen der Vorrichtung 11 ist ein Bauteil 14 vorgesehen, welches, wenn es mit einer sich in dem Lenkgetriebe 2 befindlichen Flüssigkeit in Kontakt kommt, wenigstens eine seiner Eigenschaften derart ändert, dass, nach einem Zusammenwirken des Bauteils 14 mit dem Verschlusselement 13, das Verschlusselement 13 die Öffnung 12 freigibt. Nachfolgend werden verschiedene Ausführungsformen der Vorrichtung 11 anhand vergrößerter Schnittdarstellungen erläutert.

Bei der nicht erfindungsgemäßen Ausführungsform von Fig. 2 ist das Bauteil 14 gemeinsam mit dem Verschlusselement 13 und einem zwischen dem Bauteil 14 und dem Verschlusselement 13 angeordneten Kolben 15 in einer Hülse 16 untergebracht, welche im vorliegenden Fall in die Öffnung 12 des Gehäuseteils 6 des Lenkgetriebes 2 eingeschraubt wird. Selbstverständlich ist, wie auch in den anderen Ausführungsformen, auch eine andere Art der Verbindung der Hülse 16 mit dem Gehäuseteil 6 möglich. Die Hülse 16 weist Öffnungen 17 auf, über welche die Flüssigkeit zu dem Bauteil 14 gelangen kann. Das Bauteil 14, welches beispielsweise aus einem hydrophilen Chloroprenkautschuk bestehen kann, vergrößert sein Volumen, wenn es mit der Flüssigkeit, insbesondere Wasser, in Kontakt kommt und drückt so, im vorliegenden Fall über den Kolben 15, das Verschlusselement 13 aus einer sich an die Öffnung 12 anschließenden Öffnung 12a der Hülse 16. Der Kolben 15, der eine kontrollierte Ausdehnung des Bauteils 14 sicherstellt, kann beispielsweise aus Kunststoff oder Metall bestehen.

Um im trockenen Zustand der Vorrichtung 11 ein Verschließen der Öffnung 12a durch das Verschlusselement 13 zu gewährleisten, weist dieses Vorsprünge 18 auf, die in entsprechende Hinterschneidungen 19 in der Hülse 16 eingreifen. Um die Kraft, welche das Bauteil 14 zum Entfernen des Verschlusselements 13 aus der Öffnung 12 aufbringen muss, zu minimieren, kann das Verschlusselement 13 beispielsweise aus einem Elastomer bestehen.

Bei dieser nicht erfindungsgemäßen Ausführungsform fallen das Verschlusselement 13, das Bauteil 14 und der Kolben 15 aus der Öffnung 12a und es ist kein Wiederverschließen der Öffnung 12a und somit der Öffnung 12 vorgesehen. Dies ist jedoch im Wesentlichen unschädlich, da, wenn einer der Faltenbälge 9 beschädigt ist, auch weiterhin Flüssigkeit in das Lenkgetriebe 2 gelangen kann und auf diese Weise ein Abfließen derselben aus dem Gehäuseteil 6 sichergestellt ist. Bei einer eventuellen Reparatur des beschädigten Faltenbalgs 9 in einer Werkstatt kann auch eine neue Vorrichtung 11 in die Öffnung 12 eingesetzt werden.

Eine weitere nicht erfindungsgemäße Ausführungsform der Vorrichtung 11 ist in Fig. 3 dargestellt. Auch hierbei ist eine Hülse 16 vorgesehen, welche in die Öffnung 12 des Gehäuseteils 6 eingeschraubt oder auf andere Weise befestigt wird. Wiederum kann die sich in dem Lenkgetriebe 2 befindliche Flüssigkeit über die Öffnungen 17 zu dem Bauteil 14 gelangen, welches wiederum so ausgebildet ist, dass es sein Volumen vergrößert, wenn es mit einer Flüssigkeit in Kontakt kommt. Auch diese Ausführungsform des Bauteils 14 kann aus einem hydrophilen Chloroprenkautschuk bestehen. Derartige Werkstoffe weisen eine extreme Volumenänderung auf, wenn sie mit einer Flüssigkeit, insbesondere mit Wasser, in Kontakt kommen.

In der nicht erfindungsgemäßen Ausführungsform gemäß Fig. 3 wird jedoch das Verschlusselement 13 mittels eines Federelements 20, welches im vorliegenden Fall mit einer Sicherungsscheibe 21 in der Hülse 16 gehalten ist, in seine Geschlossenstellung gegen die Öffnung 12a in der Hülse 16 gedrückt. Sobald das Bauteil 14 mit der Flüssigkeit in Kontakt kommt, vergrößert es sein Volumen und hebt das Verschlusselement 13 gegen die Kraft des Federelements 20 von der Öffnung 12a ab und gibt diese frei. Hierzu weist das Bauteil 14 an seiner dem Federelement 20 abgewandten Ende Schlitze 22 auf, die es ermöglichen, dass die Flüssigkeit durch das Bauteil 14 zu der Öffnung 12a strömen kann. Wenn die Flüssigkeit das Lenkgetriebe 2 verlassen hat, kann das Bauteil 14 austrocknen und das Verschlusselement 13 kann die Öffnung 12a in der Hülse 16 und damit auch die Öffnung 12 in dem Gehäuseteil 6 durch die von dem Federelement 20 aufgebrachte Kraft wieder verschließen. Das Federelement 20 ist hierbei nur so stark auszulegen, dass das Bauteil 14 in seinem feuchten Zustand das Verschlusselement 13 sicher gegen die Kraft desselben von der Öffnung 12a abheben kann.

Fig. 4 zeigt eine Ausführungsform der Vorrichtung 11, bei welcher das Bauteil 14 aus einem Material besteht, welches, wenn es mit einer Flüssigkeit, insbesondere mit Wasser, in Kontakt kommt, chemisch derart reagiert, dass das Bauteil 14 das Verschlusselement 13 zerstört. Auch hierbei sind sowohl das Bauteil 14 als auch das Verschlusselement 13 in einer an dem Gehäuseteil 6 angebrachten Hülse 16 angeordnet, so dass die Vorrichtung 11 nach ihrem Gebrauch in einfacher Weise ausgetauscht werden kann. Durch die beschriebene Zerstörung des Verschlusselements 13 durch das Bauteil 14 wird auch in diesem Fall die Öffnung 12a der Hülse 16 freigegeben.

Da sich die Öffnung 12a unmittelbar an die Öffnung 12 in dem Gehäuseteil 6 anschließt, kann das Freigeben der Öffnung 12a als Freigeben der Öffnung 12 angesehen werden. Es wird also jeweils nicht unmittelbar die Öffnung 12 in dem Gehäuseteil 6 freigegeben, sondern eine an die Stelle der Öffnung 12 tretende Öffnung 12a in der Hülse 16.

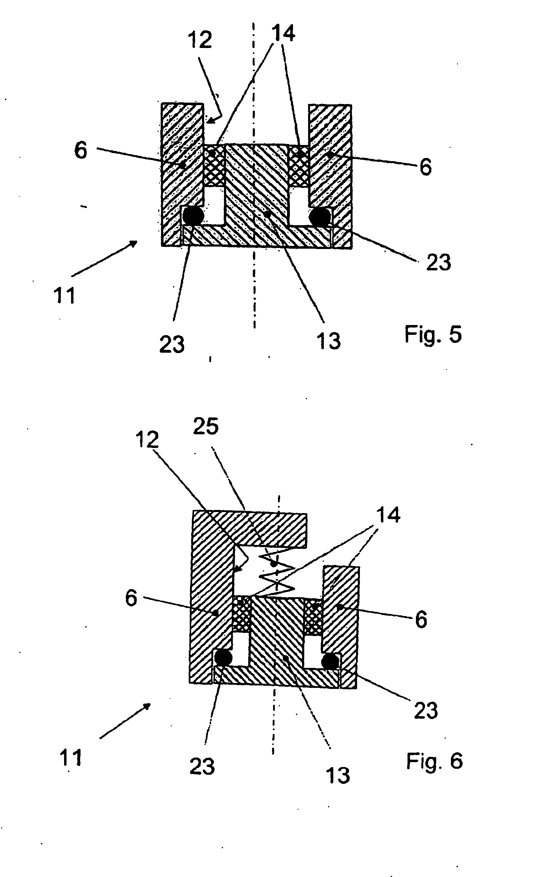

Fig. 5 zeigt eine Ausführungsform der Vorrichtung 11, bei welcher das Bauteil 14 aus einem Material besteht, welches sich, wenn es mit einer Flüssigkeit, insbesondere mit Wasser, in Kontakt kommt, auflöst und die Öffnung 12 im Gehäuseteil 6 durch das schwerkraftbedingte Herausfallen des Verschlusselementes 13 freigibt.

Fig. 6 zeigt eine Weiterbildung der Ausführungsform nach Fig. 5, in welcher das schwerkraftbedingte Herausfallen des Verschlusselementes 13 durch ein zwischen Verschlusselement 13 und Gehäuseteil 6 integriertem Federelement 25 verstärkt wird, mit dem Vorteil, dass das Verschlusselement 13 schon zeitnah bei noch nicht vollständig aufgelöstem Bauteil 14 herausgedrückt wird.

In beiden Ausführungsformen nach den Figuren 5 und 6 wird das Bauteil 14 vor Eintritt von Wasser in einem ringförmigen Spalt zwischen einer äußeren Mantelfläche des Verschlusselementes 13 und der Innenfläche der Öffnung 12 des Gehäuseteiles 6 formschlüssig gehalten. Der Ringspalt muss dabei nicht kreisförmig ausgeführt sein, sondern kann auch eine ovale oder eine andere geometrische Form aufweisen.

Um die Haltekraft zu erhöhen, weisen die Oberflächen des Bauteiles 14, des Verschlusselementes 13 und die Innenfläche 12 des Gehäuseteiles 6 eine hohe Oberflächenrauhigkeit auf. Eine andere Möglichkeit die Haftkraft zu verstärken ist es, die Abmaße des Bauteiles 14, des Verschlusselementes 13 und die Innenfläche 12 des Gehäuseteiles 6 so aufeinander abzustimmen, dass sie unter Vorspannung miteinander verbunden sind.

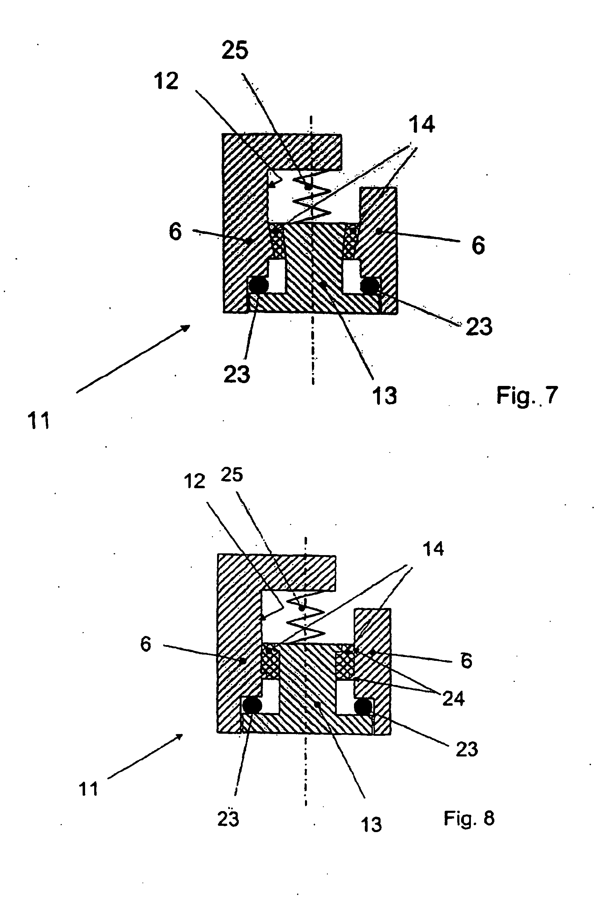

Für Materialien des Bauteiles 14, die ungeeignet für eine reibungserhöhte oder vorgespannte Aufnahme des Verschlusselementes 13 in das Gehäuseteil 6 sind, zeigt die Fig. 7 eine Ausführungsform der Vorrichtung 11, in welcher sich der Ringspalt in Richtung Gehäuseaußenseite verjüngt. Das Verschlusselement 13 ist dann im Ringspalt bis zur Auflösung des Bauteils 14 bei Wassereintritt in das Lenkgetriebe 2 durch das Bauteil 14 in der Öffnung 12 des Gehäuseteiles 6 verkeilt.

Eine andere Ausführungsform zum funktionellen Zusammenspiel von Verschlusselement 13, Bauteil 14 und Öffnung 12 des Gehäuseteiles 6 ist in der Fig. 8 dargestellt. Bei dieser Vorrichtung 11 wird das sich bei Wassereintritt auflösende Bauteil 14 bis zum Eintritt seiner Zweckbestimmung durch ein bewegungshemmendes Element 24 zwischen Verschlusselement 13 in der Öffnung 12 des Gehäuseteiles 6 gehalten. Dies erfolgt wie dargestellt, durch die Ausbildung eines Kragens an der Innenfläche der Öffnung 12 des Gehäuseteiles und/oder der äußeren Mantelfläche des Verschlusselementes 13. Andere nicht dargestellte geometrische Ausführungsformen als Verriegelungselement für die Vorrichtung 11 sind aber auch möglich.

Um das Bauteil 14 bei normalem Betrieb des Lenkgetriebes vor Spritzwasser von Außen zu schützen, weist das Verschlusselement 13 der Ausführungsformen nach den Figuren 5 bis 8 getriebeaußenseitig derart einen flanschartigen Abschluss auf, dass zwischen der gehäusezugewandten Fläche dieses flanschartigen Abschlusses und einer mit dieser Fläche korrespondierenden Fläche des Gehäuseteiles 6 eine Dichtung 23 angeordnet werden kann.

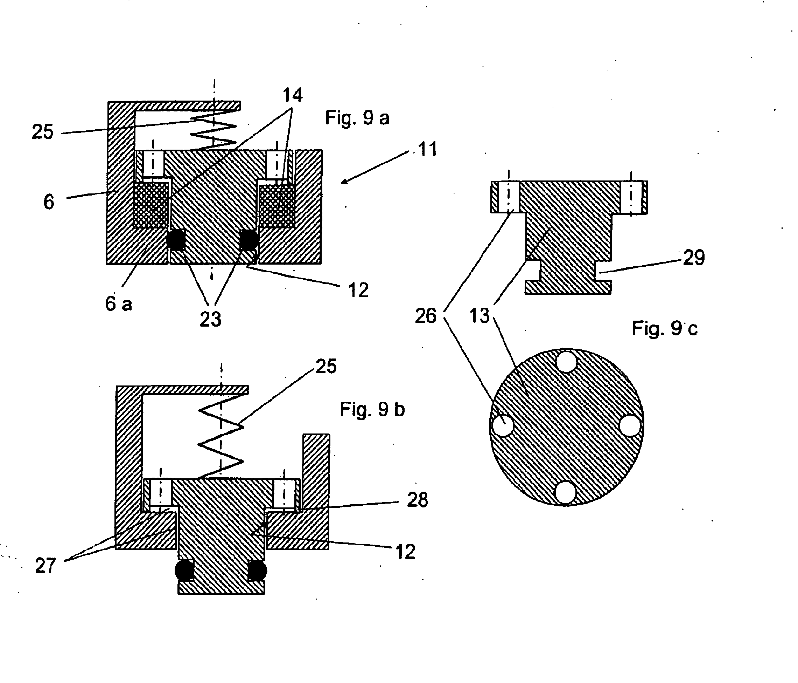

Als besonders vorteilhaft stellt sich eine Lösung nach Fig. 9 a - c dar, da das Verschlusselement 13 wieder verwendet werden kann. Bei dieser Lösung ist der flanschartige Abschluss des Verschlusselementes 13 gehäuseinnenseitig angeordnet und weist in seinem, den Kernteil des Verschlusselementes 13 überragenden Flanschteil, als Ablaufbohrungen 26 ausgebildete Öffnungen auf. Wenn die Vorrichtung 11, wie in der Fig. 9 a dargestellt, geschlossen ist, ist zwischen dem flanschartigen Abschluss des Verschlusselementes 13 und einem Bodenabschnitt 6 a des Gehäuseteiles 6, das beispielhaft ringförmige ausgebildete Bauteil 14 angeordnet. Eine Dichtung 23, welche in einer Aufnahme 29 des Kernteiles des Verschlusselementes 13 integriert ist, dichtet die Vorrichtung 11 gegen Spritzwasser ab.

Wie in den anderen Ausführungsformen schon beschrieben, löst sich das Bauteil 14 bei Wassereintritt in das Lenkgetriebe auf. Fig. 9b zeigt die Vorrichtung 11, nachdem das Bauteil 14 aufgelöst ist, und ein zwischen einem Gehäuseteil und dem Verschlusselement 13 integriertes Federelement 25, welches das Verschlusselement 13 gegen die Haftkraft des Dichtelementes 23 nach unten gedrückt hat. Eingedrungenes Wasser kann über die Ablaufbohrungen 26 und den freigegebenen Ablaufkanal 27 ablaufen. Der Ablaufkanal 27 wird einerseits durch einen ringförmigen Kanalabschnitt zwischen dem Kernteil des Verschlusselementes 13 und der Öffnung 12 im Bodenabschnitt 6a des Gehäuseteiles 6 und andererseits dadurch, dass der flanschartige Teil des Verschlusselementes 13 durch Abstandhalter 28 in einem Abstand zu dem Bodenabschnitt 6a des Gehäuseteiles 6 gehalten wird, gebildet.

In Fig. 9c ist das Verschlusselement einzeln dargestellt.

Selbstverständlich ist es auch möglich die Vorrichtung 11 der Ausführungsformen nach den Figuren 5 bis 9, wie oben beschrieben, in eine Hülse 16 zu integrieren.

Um ein möglichst vollständiges Abfließen der Flüssigkeit aus dem Lenkgetriebe 2 zu gewährleisten, sollte sich die Vorrichtung 11 bei sämtlichen Ausführungsformen an einer möglichst tiefen Stelle des Lenkgetriebes 2 befinden.

## Patentansprüche

1. Vorrichtung zum Freigeben einer Öffnung in einem Gehäuseteil eines Lenkgetriebes bei einer Fahrzeuglenkung, mit einem die Öffnung verschließenden Verschlusselement,
**gekenntzeichnet durch** ein Bauteil (14), das aus einem Material besteht, welches, wenn es mit einer Flüssigkeit in Kontakt kommt, derart reagiert, dass das Bauteil (14) sich auflöst und die Verriegelung des Verschlusselementes (13) in dem Gehäuseteil (6) löst und die Öffnung (12,12a) freigibt.

2. Vorrichtung nach Anspruch 1,
**dadurch gekennzeichnet, dass** das Bauteil (14) in einem zwischen Gehäuseteil (6) und Verschlusselement (13) gebildeten Zwischenraum integriert ist.

3. Vorrichtung nach Anspruch 1 oder 2,
**dadurch gekennzeichnet, dass** das Bauteil (14) derart in einem zwischen Gehäuseteil (6) und Verschlusselement (13) gebildeten Ringspalt integriert ist, dass das Verschlusselement (13) formschlüssig in dem Gehäuseteil (6) angeordnet ist.

4. Vorrichtung nach Anspruch 3,
**dadurch gekennzeichnet, dass** die wirkverbundenen Flächen des Bauteiles (14) und/oder des Verschlusselementes (13) und/oder des Gehäuseteiles (6) eine reibungserhöhende Oberflächenrauheit aufweisen.

5. Vorrichtung nach Anspruch 1 oder 2,
**dadurch gekennzeichnet, dass** das Bauteil (14) vorgespannt in den zwischen Gehäuseteil (6) und Verschlusselement (13) gebildeten Ringspalt integriert ist.

6. Vorrichtung nach einem der Ansprüche 1 bis 5,
**dadurch gekennzeichnet, dass** sich der zwischen Gehäuseteil (6) und Verschlusselement (13) gebildete Ringspalt in Richtung Gehäuseaußenseite verjüngt.

7. Vorrichtung nach einem der Ansprüche 1 oder 5,
**dadurch gekennzeichnet, dass** Verschlusselement (13) und/oder Gehäuseteil (6) mindestens ein bewegungshemmendes Element (24) aufweisen.

8. Vorrichtung nach einem der Ansprüche 1 bis 7,
**dadurch gekennzeichnet, dass** zwischen Verschlusselement (13) und Gehäuseteil (6) ein vorgespanntes Federelement (25) integriert ist.

9. Vorrichtung nach einem der Ansprüche 1 bis 8,
**dadurch gekennzeichnet, dass** zwischen Gehäuseteil (6) und Verschlusselement (13) eine Dichtung (23) angeordnet ist.

10. Vorrichtung nach einem der Ansprüche 1 oder 2,
**dadurch gekennzeichnet, dass** im Verschlusselement (13) und/ oder im Gehäuseteil (6) und/oder zwischen Verschlusselement (13) und Gehäuseteil (6) eine Ablaufeinrichtung (27; 26) angeordnet ist.

11. Vorrichtung zum Freigeben einer Öffnung in einem Gehäuseteil eines Lenkgetriebes bei einer Fahrzeuglenkung, mit einem die Öffnung verschließenden Verschlusselement,
**gekennzeichnet durch** ein Bauteil (14), das aus einem Material besteht, welches, wenn es mit einer Flüssigkeit in Kontakt kommt, chemisch derart reagiert, dass das Bauteil (14) das Verschlusselement (13) zerstört.

12. Vorrichtung nach einem der Ansprüche 1 bis 11,
**dadurch gekennzeichnet, dass** das Bauteil (14) und die Verschlusseinrichtung (13) in einer Hülse (16) angeordnet sind, welche mit dem Gehäuseteil (6) verbunden ist.

13. Vorrichtung nach Anspruch 12,
**dadurch gekennzeichnet, dass** die Hülse (16) eine sich an die Öffnung (12) in dem Gehäuseteil (6) anschließende Öffnung (12a) aufweist.

## Claims

1. Apparatus for uncovering an opening in a housing part of a steering gear in a vehicle steering system, having a closure element which closes the opening, **characterized by** a component (14) which is composed of a material which, when it comes into contact with a liquid, reacts in such a way that the component (14) dissolves and releases the locking action of the closure element (13) in the housing part (6) and uncovers the opening (12, 12a).

2. Apparatus according to Claim 1, **characterized in that** the component (14) is integrated in an intermediate space which is formed between the housing part (6) and the closure element (13).

3. Apparatus according to Claim 1 or 2, **characterized in that** the component (14) is integrated in an annular gap which is formed between the housing part (6) and the closure element (13) in such a way that the closure element (13) is arranged in the housing part (6) in a positively locking manner.

4. Apparatus according to Claim 3, **characterized in that** the operatively connected surfaces of the component (14) and/or of the closure element (13) and/or of the housing part (6) have a surface roughness which increases friction.

5. Apparatus according to Claim 1 or 2, **characterized in that** the component (14) is integrated in a prestressed manner into the annular gap which is formed between the housing part (6) and the closure element (13).

6. Apparatus according to one of Claims 1 to 5, **characterized in that** the annular gap which is formed between the housing part (6) and the closure element (13) tapers in the direction of the outer side of the housing.

7. Apparatus according to either of Claims 1 and 5, **characterized in that** the closure element (13) and/or the housing part (6) have/has at least one movement-inhibiting element (24).

8. Apparatus according to one of Claims 1 to 7, **characterized in that** a prestressed spring element (25) is integrated between the closure element (13) and the housing part (6).

9. Apparatus according to one of Claims 1 to 8, **characterized in that** a seal (23) is arranged between the housing part (6) and the closure element (13).

10. Apparatus according to either of Claims 1 and 2, **characterized in that** an outlet device (27; 26) is arranged in the closure element (13) and/or in the housing part (6) and/or between the closure element (13) and the housing part (6).

11. Apparatus for uncovering an opening in a housing part of a steering gear in a vehicle steering system, having a closure element which closes the opening, **characterized by** a component (14) which is composed of a material which, when it comes into contact with a liquid, reacts chemically in such a way that the component (14) destroys the closure element (13).

12. Apparatus according to one of Claims 1 to 11, **characterized in that** the component (14) and the closure device (13) are arranged in a sleeve (16) which is connected to the housing part (6).

13. Apparatus according to Claim 12, **characterized in that** the sleeve (16) has an opening (12a) which adjoins the opening (12) in the housing part (6).

## Revendications

1. Dispositif pour dégager une ouverture dans un élément de boîtier d'un mécanisme de direction, dans une direction de véhicule, comprenant un élément de fermeture fermant l'ouverture,
**caractérisé par** un composant (14) qui se compose d'un matériau qui, lorsqu'il vient en contact avec un liquide, réagit de telle sorte que le composant (14) se détache et qu'il libère le verrouillage de l'élément de fermeture (13) dans l'élément de boîtier (6) et qu'il dégage l'ouverture (12, 12a).

2. Dispositif selon la revendication 1,
**caractérisé en ce que** le composant (14) est intégré dans un espace intermédiaire formé entre l'élément de boîtier (6) et l'élément de fermeture (13).

3. Dispositif selon la revendication 1 ou 2,
**caractérisé en ce que** le composant (14) est intégré dans une fente annulaire formée entre l'élément de boîtier (6) et l'élément de fermeture (13), de telle sorte que l'élément de fermeture (13) soit disposé par engagement positif dans l'élément de boîtier (6).

4. Dispositif selon la revendication 3,
**caractérisé en ce que** les surfaces en liaison fonctionnelle du composant (14) et/ou de l'élément de fermeture (13) et/ou de l'élément de boîtier (6) présentent une rugosité de surface augmentant les frottements.

5. Dispositif selon la revendication 1 ou 2,
**caractérisé en ce que** le composant (14) est intégré de manière précontrainte dans la fente annulaire formée entre l'élément de boîtier (6) et l'élément de fermeture (13).

6. Dispositif selon l'une quelconque des revendications 1 à 5,
**caractérisé en ce que** la fente annulaire formée entre l'élément de boîtier (6) et l'élément de fermeture (13) se rétrécit dans la direction du côté extérieur du boîtier.

7. Dispositif selon l'une quelconque des revendications 1 ou 5,
**caractérisé en ce que** l'élément de fermeture (13) et/ou l'élément de boîtier (6) présentent au moins un élément s'opposant au mouvement (24).

8. Dispositif selon l'une quelconque des revendications 1 à 7,
**caractérisé en ce qu'**un élément de ressort précontraint (25) est intégré entre l'élément de fermeture (13) et l'élément de boîtier (6).

9. Dispositif selon l'une quelconque des revendications 1 à 8,
**caractérisé en ce qu'**un joint d'étanchéité (23) est disposé entre l'élément de boîtier (6) et l'élément de fermeture (13).

10. Dispositif selon l'une quelconque des revendications 1 ou 2,
**caractérisé en ce qu'**un système d'écoulement (27 ; 26) est disposé dans l'élément de fermeture (13) et/ou dans l'élément de boîtier (6) et/ou entre l'élément de fermeture (13) et l'élément de boîtier (6).

11. Dispositif pour dégager une ouverture dans un élément de boîtier d'un mécanisme de direction dans une direction de véhicule, comprenant un élément de fermeture fermant l'ouverture,
**caractérisé par** un composant (14) qui se compose d'un matériau qui, lorsqu'il vient en contact avec un liquide, réagit chimiquement de telle sorte que le composant (14) détruise l'élément de fermeture (13).

12. Dispositif selon l'une quelconque des revendications 1 à 11,
**caractérisé en ce que** le composant (14) et l'élément de fermeture (13) sont disposés dans une gaine (16) qui est connectée à l'élément de boîtier (6).

13. Dispositif selon la revendication 12,
**caractérisé en ce que** la gaine (16) présente une ouverture (12a) se raccordant à l'ouverture (12) dans l'élément de boîtier (6).
